# EUROPEAN PATENT APPLICATION

(11) **EP 4 738 728 A1**
(43) Date of publication of application: **06.05.2026**
(21) Application number: 25201622.5
(22) Date of filing: 11.09.2025
(51) Int. Cl.: H04B 10/2519, G02B 6/293

(54) **INTEGRATED PRISM-CHIRPED VOLUME BRAGG GRATING FOR DISPERSION COMPENSATION**

(30) Priority: 30.10.2024 US 202418932107
(71) Applicant: Google LLC, Mountain View, CA 94043 (US)
(72) Inventor: Wang, Liming, Mountain View, 94043 (US); Zhou, Xiang, Mountain View, 94043 (US); Lam, Cedric Fung, Mountain View, 94043 (US)
(74) Representative: Betten & Resch

(57) **Abstract**

Aspects of the disclosure are directed to a system for incorporating a CVBG (Chirped Volume Bragg Grating) into a prism to form a P-CVBG (Prism-Chirped Volume Bragg Grating) optical element for channel dispersion compensation. A prism region is configured to receive optical signals with multiple wavelengths and provide the wavelengths to the CVBG region by spatially separating the optical signals into various wavelengths. The CVBG region is configured to compensate for dispersion of the multiple wavelengths by reflecting the various wavelengths at different depths within the gratings of the CVBG region.

## Description

### BACKGROUND

Optical modulation is a technology in modem data communication networks, enabling transmission over single-mode fibers (SMFs) ranging from meters to thousands of kilometers. This modulation inherently broadens the spectrum of laser sources, distributing information across multiple light wavelengths or frequencies. The signal spectrum typically expands with increasing data rates.

SMFs exhibit chromatic dispersion due to material properties and waveguide effects, causing different wavelengths to propagate at varying speeds. As an optical signal travels through the fiber, the total chromatic dispersion can alter optical pulse widths, leading to undesired mixing of pulse energies. This effect, known as intersymbol interference (ISI), can significantly degrade signal quality. Various techniques have been proposed to mitigate ISI, yet significant challenges remain unresolved.

### BRIEF SUMMARY

Aspects of the disclosure are directed to a system for incorporating a chirped volume Bragg grating (CVBG) into a prism to form a Prism-CVBG (P-CVBG) optical element for channel dispersion compensation. A prism region is configured to receive optical signals with multiple wavelengths and provide the wavelengths to the CVBG region by spatially separating the optical signals into various wavelengths. The CVBG region is configured to compensate for dispersion of the multiple wavelengths by reflecting the various wavelengths at different depths within the gratings of the CVBG region.

An aspect of the disclosure provides for an optical element for channel dispersion compensation, including: a prism region configured to receive one or more optical signals having multiple wavelengths; and a chirped volume Bragg grating (CVBG) region formed within the prism region.

In an example, the prism region is further configured to separate the one or more optical signals into the multiple wavelengths. In another example, the CVBG region is configured to: compensate for communication link dispersion of the multiple wavelengths, wherein compensating the communication link dispersion of the multiple wavelengths includes dispersing the one or more signals using one or more gratings in the CVBG region.

In yet another example, the CVBG region is configured based on at least one parameter associated with at least one of polarities of dispersion, orders of dispersion, or passband characteristics.

In yet another example, the optical element for channel dispersion compensation includes high-reflection (HR) coatings on a back surface of the CVBG region to provide reflection of non-dispersive signals.

In yet another example, the HR coatings are positioned on an incident surface of the optical element to fold the multiple wavelengths into one or more combined signals. In yet another example, the prism region and CVBG region are formed with matching angles.

In yet another example, the CVBG region comprises one or more segments, each of the segments comprising a pattern of gratings, each of the pattern of gratings having a spatial chirp.

In yet another example, each of the segments has a different pattern of gratings. In yet another example, the CVBG region is a diffraction free region to limit dispersion for one or more of the multiple wavelengths.

In yet another example, the CVBG region comprises one or more segments, each of the segments comprising a pattern of gratings, each of the pattern of gratings having a spatial chirp.

In yet another example, each of the segments has a different pattern of gratings. In yet another example, the CVBG region is a diffraction free region to limit dispersion for one or more of the multiple wavelengths.

In yet another example, the CVBG region comprises one or more segments, each of the segments comprising a pattern of gratings, each of the pattern of gratings having a spatial chirp.

In yet another example, each of the segments has a different pattern of gratings. In yet another example, the CVBG region is a diffraction free region to limit dispersion for one or more of the multiple wavelengths.

In yet another example, the CVBG region is a diffraction free region to limit dispersion for one or more of the multiple wavelengths.

Another aspect of the disclosure provides for a system for channel dispersion compensation, including: an optical transceiver configured to generate multiple dimensional optical signals, the optical transceiver comprising: one or more lasers; one or more photodetectors; and an optical element, including: an angled prism region configured to receive the optical signals having multiple wavelengths; and a chirped volume Bragg grating (CVBG) region formed with the angled prism region.

In an example, the CVBG region is configured to: disperse one or more of the optical signals using the one or more gratings to compensate for dispersion; and combine the dispersed signals with other dispersed signals.

In yet another example, the CVBG region includes one or more segments, each of the segments comprising a pattern of gratings, each of the pattern of gratings having a spatial chirp. In yet another example, each of the segments has a different pattern of gratings.

In yet another example, the CVBG region is configured based on at least one parameter associated with at least one of polarities of dispersion, orders of dispersion, or passband characteristics.

In yet another example, the system for channel dispersion compensation includes high-reflection (HR) coatings on a back surface of the CVBG region to limit additional dispersion. In yet another example, the HR coatings are positioned on an incident surface of the optical element.

In yet another example, the CVBG region is a diffraction free region to reduce additional dispersion. In yet another example, the system for channel dispersion compensation includes multiple filters connected to the optical element. In yet another example, the system for channel dispersion compensation includes a multiplexer optically coupled to the optical element to receive the combined dispersed signals.

### BRIEF DESCRIPTION OF THE DRAWINGS

FIG. 1 depicts an example of a prism-chirped volume Bragg grating (P-CVBG) optical element according to aspects of the disclosure.
FIG. 2 depicts examples of the arrangement of segment gratings in a P-CVBG device according to aspects of the disclosure.
FIG. 3 depicts an example of a P-CVBG device with a wavelength-division multiplexing (WDM) multiplexer according to aspects of the disclosure.
Fig. 4 depicts an example of a P-CVBG device integrated with conventional WDM filters according to aspects of the disclosure.
Fig. 5 depicts an example of multiple P-CVBG devices according to aspects of the disclosure.
Fig. 6 depicts an example of optic transceiver apparatus 200 with a dispersion compensator having one or more P-CVBG devices according to aspects of the disclosure.

### DETAILED DESCRIPTION

The technology relates generally to a system for incorporating a chirped volume Bragg grating (CVBG) into a prism to form a prism-CVBG (P-CVBG) optical element for channel dispersion compensation. CVBG is an optical element used to provide light propagation space to separate the diffracted light from the incident light spatially to control the dispersion of optical signals (also referred to as "beams"), and a prism is an optical device that diffracts light. The P-CVBG device combines the dispersion control capabilities of CVBG with the light-path manipulation properties of a prism. The prism may perform a function of the Z-block configuration utilized in conventional optical multiplexers and demultiplexers. The prism enables the device to effectively combine multiple wavelengths into a single beam for multiplexing operations or to separate a multi-wavelength beam into its wavelengths for demultiplexing operations.

Existing dispersion compensation techniques for fiber optic communications include inline optical dispersion compensation, optical carrier wavelength optimization, coherent detection, and transmitter pre-chirp. While each method offers unique advantages, each method has specific constraints that limit its effectiveness. Inline compensators, such as dispersion compensation fibers and chirped fiber Bragg gratings, are often too large for compact applications. Wavelength optimization becomes impractical with the increasing demand for higher throughput and the adoption of wavelength-division multiplexing (WDM) systems. Coherent detection, while effective, requires high power consumption. Transmitter pre-chirp has a limited practical range due to implementation constraints. These techniques generally suffer from issues such as high insertion loss, low signal passband, high cost, or bulkiness, making them unsuitable for small form factor (SFF) optical transceivers like octal small form factor pluggable (OSFP) and quad small form factor pluggable double density (QSFP-DD), which require compact, efficient, and cost-effective solutions.

Furthermore, existing waveguide-based and thin film dispersion compensation techniques face similar constraints. Reflective waveguide gratings often provide insufficient dispersion or bandwidth, and require additional components like circulators, leading to high insertion loss and cost. Transmissive ring structures demand sensitive control schemes, while tailored gratings and AWG-based compensators suffer from complexity and high loss. Cascaded MZI designs are complex with narrow passbands. Thin film coatings and Gires-Tournois etalons can only achieve limited dispersion, insufficient for most communication systems. Ring-based all-pass designs have small free spectral ranges, and MZM-based designs, while supporting necessary FSR, offer minimal dispersion. That is, these methods struggle with issues of limited dispersion, narrow bandwidth, high loss, complexity, or cost, making them suboptimal for modem optical communication needs, particularly in compact, high-performance applications.

The integration of CVBGs with a prism can address the existing constraints described above and provide many benefits over other dispersion technologies, such as providing effective dispersion compensation while maintaining a compact form factor suitable for modern optical communication systems. P-CVBG is cost-effective and compact, making it useful for the small form factor (SFF) transceiver market. P-CVBG can be easily controlled passively without active control and has low insertion loss. P-CVBG also provides a wide channel passband, accommodating high data rates and laser frequency variations. P-CVBG offers sufficient dispersion compensation to extend transmission reach, while maintaining low group delay ripples. Designed for mass production without additional components, such as an optical circulator, it supports WDM applications with the ability to optimize dispersion for individual channels. These features alone and collectively make the P-CVBG a comprehensive and efficient solution for addressing dispersion challenges in optical communication systems, particularly in space-constrained and high-performance applications.

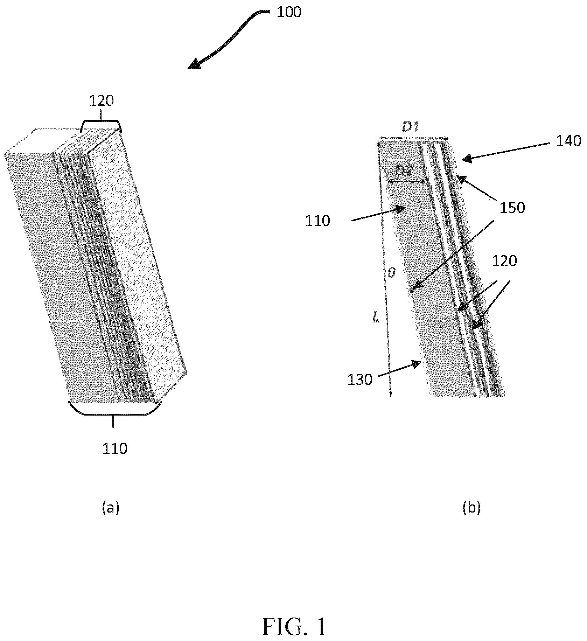

FIG. 1 depicts an example of a P-CVBG optical element 100. Figure 1(a) shows the integration of a CVBG region 120 within a prism structure 110. The P-CVBG device 100 is fabricated by creating a CVBG structure 120 within a prism-shaped optical medium 110. Fabrication of the CVBG structure 120 within the prism-shaped optical medium 110 may be achieved by exposing a photosensitive prism-shaped substrate to a controlled interference pattern of ultraviolet light. Such exposure may induce periodic variations in the refractive index of the material. The chirps in the grating may be created by gradually varying the interference pattern period during the exposure process. For example, the integration of the diffraction-free prism region and the CVBG regions can be fabricated separately and then mechanically assembled.

Figure 1(b) shows an example of a cross-sectional view of a P-CVBG device 100. The parameters of the P-CVBG device 100, including its length (L), total depth (D1), prism region depth (D2), and light incident angle (θ), can be optimized together for specific applications. The incident light does not meet the P-CVBG device perpendicularly but at an angle θ. This enables the spatial separation of reflected light from the incident light without the need of additional optical components, such as an optical circular. Consequently, the incident plane 130 may be tilted by θ relative to the surface perpendicular to the incident light. As the incident light enters the prism region 110, it can be separated into multiple wavelengths. Upon entering the CVBG region 120, these separated wavelengths may interact with the chirped grating structure of the CVBG region 120. The chirped grating structure of the CVBG region 120 allows for wavelength-dependent reflection and propagation. Shorter wavelengths are typically reflected near the front of the CVBG, while longer wavelengths penetrate deeper before reflection. This differential path length introduces a wavelength-dependent delay, effectively compensating for the dispersion experienced in the optical fiber. The chirped grating structure of the CVBG region 120 can be tailored to provide specific dispersion characteristics, allowing for precise compensation of the chromatic dispersion accumulated in the transmission fiber. As the multiple wavelengths reflect and propagate through the CVBG region 120, the wavelengths undergo controlled delays that counteract the dispersion effects. Finally, the dispersion-compensated light can exit through the backplane of the P-CVBG 140.

For example, anti-reflection (AR) coatings 150 can be applied to the light incident surface 130 and/or the backside surface of the P-CVBG 140. AR coatings 150 increase the transmission of a specific wavelength or wavelength band. By applying an AR coating, unwanted light reflections may be reduced to optimize light transmission profiles and reduce unwanted dispersion ripples.

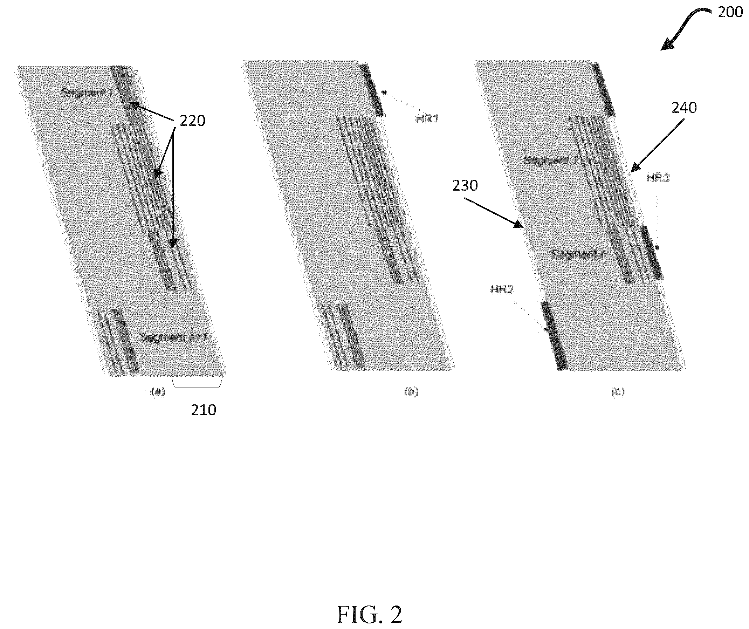

The P-CVBG device 100 can be comprised of multiple segments for the optimization of multi-channel link performance. For example, in WDM systems with multi-channels, an additional CVBG segment can be integrated into the device. Fig. 2 illustrates examples of the arrangement of segment gratings in a P-CVBG device 200. As shown in Fig. 2(a), various gratings 220 are positioned within the prism 200. Each of the various gratings 220 may be referred to as a segment. The CVBG region 210 can be divided into several segments i - (n+1), each independently optimizable by various design parameters, such as grating geometric or optical parameters. Each segment can be specifically optimized to compensate for the wavelength of a particular channel, and may have different chirp characteristics. Consequently, the grating period varies differently across each segment. As the light of different wavelengths from multiple channels passes through these various segments, each wavelength can be delayed by an appropriate amount according to the characteristics of the respective segment. These segments can be tailored to specific channel wavelengths. As a result, dispersion is compensated over all relevant wavelengths. Each segment effectively addresses the unique requirements of its corresponding channel.

To enhance the P-CVBG's functionality, various high-reflection (HR) coatings can be applied. For example, HR coatings in Fig. 2(b) and Fig. 2(c) can reflect most or all of a wavelength band. HR1 coating may be applied to a specific area of the backplane 240, creating light path foldings without additional dispersion. Alternatively, in place of the segment n+1 in Fig. 2(a), an HR2 coating in Fig. 2(c) can be applied to the incident plane 230. Further, HR3 in coatings Fig. 2(c) can be applied to the backplane of the segments 240 in conjunction with the segments. These coatings can be configured to reflect desired wavelengths of light that fall outside the CVBG diffraction passband.

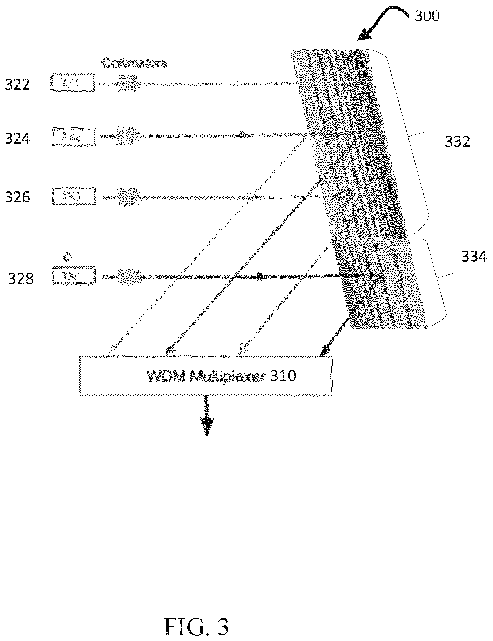

Figure 3 depicts an example of a P-CVBG device 300 integrated with an optical multiplexer 310 for multiple channels. The P-CVBG device 300 can be designed to receive multiple channels with different wavelengths and can be configured to compensate for the different wavelengths through its multiple segments. As shown in Fig. 3, the P-CVBG device 300 can be configured to incorporate two segments with different grating periods, 332 and 334, to accommodate four multi-channels. The four channels, 322, 324, 326, and 328, each have distinct wavelengths. The wavelengths of channels 322, 324, and 326 can be directed into segment 332, while the wavelength of channel 328 can enter segment 334.

As the light from these channels passes through the P-CVBG device 300, it enters the CVBG region, where each wavelength can be diffracted by its corresponding grating pattern. Although the four channels 322, 324, 326, and 328 have different wavelengths, as they traverse the segments 332 and 334, each wavelength component experiences a specific delay. The specific delay can be determined by the characteristics of the respective segment it passes through. Through this process, the four channels 322, 324, 326, and 328 can simultaneously reach the WDM multiplexer 310. This simultaneous arrival can be achieved through the precise compensation provided by the P-CVBG device's segmented structure.

The P-CVBG device 300 can be configured to process multiple wavelengths simultaneously, providing customized dispersion compensation for each channel while maintaining synchronized output. This design can be applied to WDM systems where efficient management of multiple wavelengths is required. The structure of the P-CVBG device 300 can perform functions traditionally carried out by separate components, potentially simplifying overall system design and reducing its size. The chirped grating structure of the P-CVBG device 300 can selectively interact with different wavelengths, separating and recombining various wavelength channels. This functionality can replace individual WDM filters in the system.

The chirped grating structure of the P-CVBG device 300 selectively interacts with different wavelengths, separating and recombining various wavelength channels, potentially replacing individual WDM filters in the system. It can be designed to output a collimated beam directly, integrating the collimation function into the dispersion compensation process. This feature eliminates the need for a separate collimator, reducing optical interfaces and potentially decreasing insertion losses. The grating structure within the P-CVBG 300 can selectively reflect specific wavelengths at particular points, performing the role of HR coatings typically used in traditional WDM systems. By integrating wavelength filtering, collimation, and selective reflection into a single device, the P-CVBG 300 provides a compact and efficient solution for WDM systems.

A similar arrangement can be used to create a WDM-demultiplexer at the receiver side of a WDM optical transceiver. For another example, the prism region can be eliminated to allow for a deeper CVBG region with the same device depth. The prism length can be reduced to 0 or keep a certain finite length.

The WDM channels do not require even spacing. Typically, some existing dispersion compensation techniques only work with even channel spacing. Since the gratings of the P-CVBG can be designed independently, the P-CVBG can provide for the uneven channel compensation. Uneven channel spacing can be advantageous for certain implementations, such as optimizing dispersion and loss properties across channels. The prism region, the CVBG region, and a light-folding common port can be monolithically integrated to achieve a compact channel-dispersion-compensation wavelength-division multiplexer (CDC-WDM-Mux) or channel-dispersion-compensation wavelength-division demultiplexer (CDC-WDM-DeMux) design.

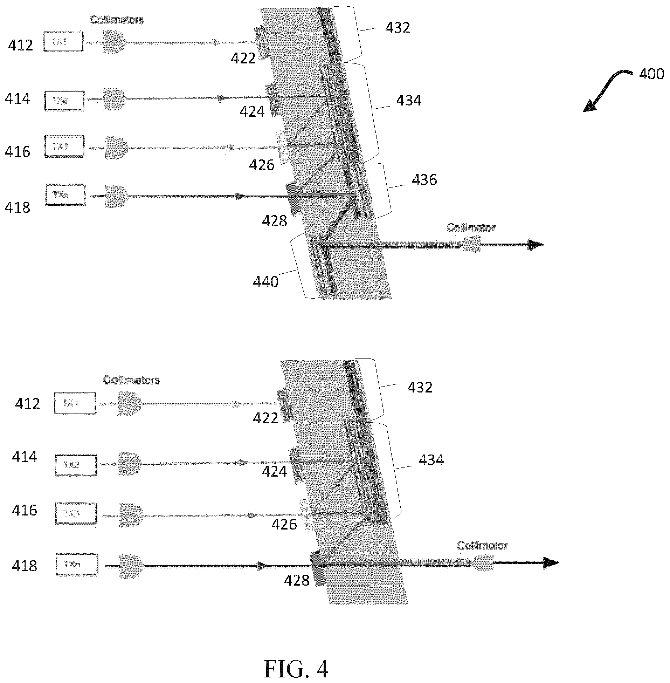

Fig. 4 depicts an example of a P-CVBG device 400 integrated with conventional WDM filters. As shown in Fig. 4(a), the P-CVBG devices include four WDM filters 422, 424, 426, and 428 positioned on the incident surface of the P-CVBG. Each WDM filter selectively separates specific wavelengths from incident light, transmitting certain wavelengths while blocking or reflecting others. The four WDM filters 422, 424, 426, and 428 function to handle incident light from four distinct channels.

As light enters the four WDM filters 422, 424, 426, and 428, each WDM filter separates specific wavelengths, directing them into corresponding segments 432, 434, and 436 within the P-CVBG. For example, wavelengths of the first channel separated by filter 422 enter segment 432, where the separated wavelengths interact with gratings of the segments 432 tailored to the first channel specific characteristics. This process repeats for wavelengths entering through filters 424, 426, and 428 and each wavelength can enter an appropriate grating segment.

The P-CVBG device can be configured such that after initial diffraction by the respect gratings of segments, the wavelengths are reflected back into the CVBG region by the WDM filters on the incident surface. Each wavelength is delayed according to its characteristics by the periodicity of the gratings, and then diffracted back towards the rear of the P-CVBG incident surface. The WDM filters encountered at this point can reflect these diffracted wavelengths rather than allowing them to pass through.

This reflection results in additional interactions with gratings in other segments, creating a complex path of multiple diffractions and reflections. For example, the first wavelength may be diffracted by specific gratings in segment 432 and then reflected again by WDM filter 424. This reflected wavelength can then enter the second segment 434. Upon entry, the wavelength is diffracted by the gratings in segment 434 that match its wavelength characteristics, directing it towards the rear of the incident surface. It is then reflected once more by WDM filter 426, repeating this process with other segments.

The P-CVBG device 400 can be configured to combine the wavelengths after its initial diffraction with wavelengths from other channels entering through the same filter. For example, when the wavelength from the first channel is reflected by WDM filter 424, it may combine with wavelengths from the second channel that are entering the device through filter 424. This process of combination and re-diffraction occurs at each reflection, allowing for complex interactions between wavelengths from different channels.

Through this iterative process of diffraction and reflection, each wavelength experiences multiple interactions with different grating segments. This results in a cumulative delay that is precisely controlled by the grating characteristics of each segment and the reflective properties of the WDM filters. The complex path created by these multiple diffractions and reflections allows for fine-tuning of the dispersion compensation for each wavelength.

For another example, one of the segments can be located on the backside of the incident plane. As shown in Fig. 4(a), the segment 440 is located on the backside of the incident plane of P-CVBG 400. This configuration can provide the function of WDM filters by reflecting the combined wavelengths to output. The segment 440 can serve as a final dispersion compensation stage, allowing for precise adjustment of the cumulative delay experienced by each wavelength. The placement of segment 440 on the backside of the incident plane also enables it to interact with wavelengths that have already undergone multiple reflections and combinations, providing a final opportunity for dispersion management before the light exits the device.

Fig. 4(b) depicts another example of a P-CVBG device 400 integrated with conventional WDM filters. As shown in Figure 4(b), a simplified arrangement can be used if dispersion compensation is not required for one of the WDM channels. For example, channel 418 cannot be necessary for dispersion compensation. In this case, the wavelengths of channel 418 can be passed through the P-CVBG. This configuration reduces the size of the P-CVBG-Mux or -DeMux, which improves the miniaturization and efficiency of the device.

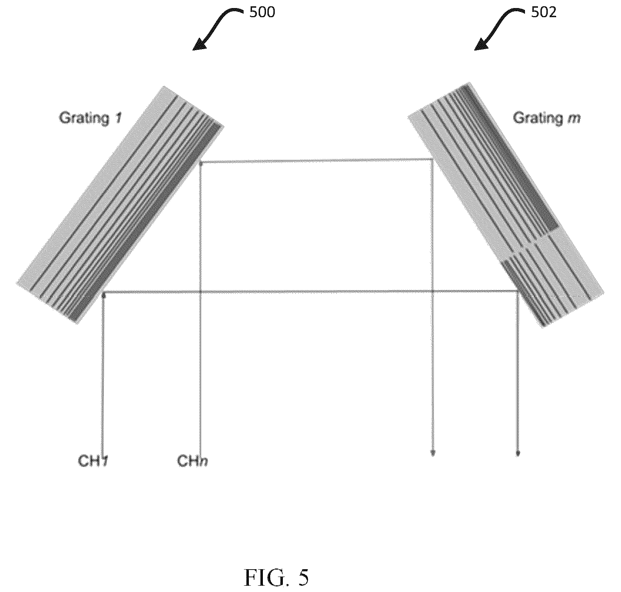

Fig. 5 depicts an example of multiple P-CVBG device 400. As shown in Fig. 5, multiple P-CVBG devices 500 and 502 can be arranged in various ways to achieve accumulated amounts of dispersions. The accumulated dispersion can be independently optimized for each of the WDM channels.

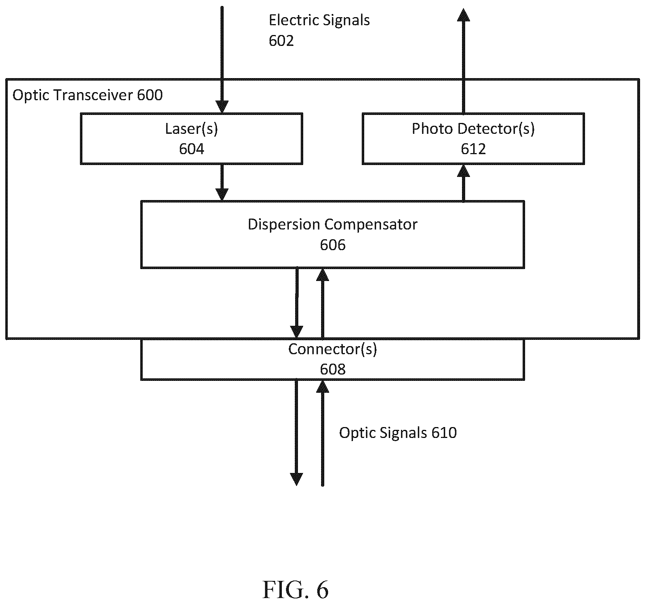

Fig. 6 depicts an example of an optic transceiver apparatus 600 with a dispersion compensator having one or more P-CVBG devices. Optic transceiver apparatus 500 includes a laser and a photo detector connected to an dispersion compensator 112 which includes one or more P-CVBG devices 100, 200, 300, 400, and 500.

The optic transceiver apparatus 600 can be configured to receive electrical signals 602 as input. The laser 604 within the apparatus 600 can be configured to convert these electrical signals into modulated optical signals. These optical signals are then directed to the dispersion compensator 606. The dispersion compensator 606, which includes one or more P-CVBG devices, can be configured to process the optical signals from the laser. The P-CVBG devices within the dispersion compensator can be configured to apply precise delays to different wavelength components of the signal, effectively compensating for dispersion effects that may occur during transmission. After processing by the dispersion compensator 606, the compensated optical signals can be configured to pass through a connector 608. This connector can be configured to couple the compensated optical signals into an external optical fiber network for transmission. For incoming signals, the optic transceiver apparatus 600 can be configured to operate in reverse. Optical signals received from the external network can be directed through the dispersion compensator 606 for additional compensation if necessary. The photo detector 612 can then be configured to convert these processed optical signals back into electrical signals for further processing or use. This configuration of the optic transceiver apparatus 600 allows for effective dispersion compensation in both transmission and reception paths, enabling high-quality optical communication. The integration of P-CVBG devices in the dispersion compensator 606 provides a compact and efficient solution for managing signal dispersion within the transceiver, potentially improving overall system performance and transmission distances.

Aspects of this disclosure can be implemented in digital electronic circuitry, in tangibly embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed thereon software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. An optical element for channel dispersion compensation, comprising:
a prism region configured to receive one or more optical signals having multiple wavelengths; and
a chirped volume Bragg grating (CVBG) region formed within the prism region.

2. The optical element of claim 1, wherein the prism region is further configured to separate the one or more optical signals into the multiple wavelengths.

3. The optical element of claim 2, wherein the CVBG region is configured to:
compensate for communication link dispersion of the multiple wavelengths, wherein compensating the communication link dispersion of the multiple wavelengths comprises dispersing the one or more signals using one or more gratings in the CVBG region.

4. The optical element of claim 3, wherein the CVBG region is configured based on at least one parameter associated with at least one of polarities of dispersion, orders of dispersion, or passband characteristics.

5. The optical element of claim 3, further comprising high-reflection (HR) coatings on a back surface of the CVBG region to provide reflection of non-dispersive signals.

6. The optical element of claim 5, wherein the HR coatings are positioned on an incident surface of the optical element to fold the multiple wavelengths into one or more combined signals.

7. The optical element of any one of claims 1 to 6, wherein the prism region and CVBG region are formed with matching angles; and/or
wherein the CVBG region comprises one or more segments, each of the segments comprising a pattern of gratings, each of the pattern of gratings having a spatial chirp; and
wherein each of the segments optionally has a different pattern of gratings.

8. The optical element of any one of claims 1 to 7, wherein the CVBG region is a diffraction free region to limit dispersion for one or more of the multiple wavelengths.

9. System for channel dispersion compensation, comprising:
an optical transceiver configured to generate multiple dimensional optical signals, the optical transceiver comprising:
one or more lasers;
one or more photodetectors; and
an optical element, comprising:
an angled prism region configured to receive the optical signals having multiple wavelengths; and
a chirped volume Bragg grating (CVBG) region formed with the angled prism region.

10. The system of claim 9, wherein the CVBG region is configured to:
disperse one or more of the optical signals using the one or more gratings to compensate for dispersion; and
combine the dispersed signals with other dispersed signals.

11. The system of claim 9 or claim 10, wherein the CVBG region comprises one or more segments, each of the segments comprising a pattern of gratings, each of the pattern of gratings having a spatial chirp.

12. The system of claim 11, wherein each of the segments has a different pattern of gratings.

13. The system of any one of claims 9 to 12, the CVBG region is configured based on at least one parameter associated with at least one of polarities of dispersion, orders of dispersion, or passband characteristics; and/or
further comprising high-reflection (HR) coatings on a back surface of the CVBG region to limit additional dispersion; and
wherein the HR coatings optionally are positioned on an incident surface of the optical element.

14. The system of any one of claims 9 to 13, wherein the CVBG region is a diffraction free region to reduce additional dispersion; and/or
further comprising multiple filters connected to the optical element.

15. The system of any one of claims 10 to 14, further comprising a multiplexer optically coupled to the optical element to receive the combined dispersed signals.
